# EUROPEAN PATENT APPLICATION

(11) **EP 1 168 321 A1**
(43) Date of publication of application: **02.01.2002**
(21) Application number: 00830460.2
(22) Date of filing: 30.06.2000
(51) Int. Cl.: G11B 7/26, G11B 23/40

(54) **Method of applying labels to optical discs for data storage**

(71) Applicant: TAPEMATIC S.p.A., I-20052 Monza (Milano) (IT)
(72) Inventor: Perego, Luciano, 20050 Mezzago (MI) (IT)
(74) Representative: Tansini, Elio Fabrizio

(57) **Abstract**

Within the manufacturing process of an optical disc (1), a label (5) of paper or plastic material reproducing written indications, graphic motifs or other identification marks, is disposed upon a lacquering fluid deposited in the form of a circumferential stringcourse (3) around the central hole (4) of the disc-shaped medium (2) being part of the disc under production. By a centrifugation step, distribution of the lacquering fluid in a thin layer (6) between the disc-shaped medium (2) and the label (5) is caused. Following solidification of the lacquering fluid obtained by ultraviolet radiation, the label (5) is firmly anchored to the disc-shaped medium (2).

## Description

The present invention relates to a method of reproducing written indications and/or graphic motifs on optical discs for data storage.

It is known that manufacturing of optical discs for data storage such as CD (compact discs) or DVD (digital versatile discs) for example, first involves making a disc-shaped medium of polycarbonate or other appropriate transparent plastic material, obtained by an injection moulding operation.

In pre-recorded discs, the disc-shaped medium obtained from the moulding step is already provided with digital codes, disposed on a surface thereof opposite to the reading side. In recordable or rewritable discs the disc-shaped medium is on the contrary provided with a spiral-shaped track serving as an optical reference during use of the disc, for a laser read/write head operating before said reading side.

Subsequently to the moulding step the disc-shaped medium is submitted to a metallization step carried out on the surface opposite to the reading side. In the case of recordable discs and/or rewritable discs the metallization step is preceded by a step of depositing a photosensitive polymer lending itself to receive the data recorded by the laser write head and make them available for the subsequent read steps.

The metallization operation essentially consists in depositing on the surface carrying the recorded data or the photosensitive polymer, a thin reflecting layer generally of an aluminium base that necessarily must be protected from mechanical abrasions and external agents. For the purpose, a protective layer obtained by a lacquering step is deposited onto the metallized surface.

In more detail, an appropriate amount of lacquering fluid in the form of a continuous stringcourse is deposited on the disc being manufactured, around the central hole of same, which disc is supported by a mandrel and has its reading side turned downwards. Subsequently, the disc is centrifuged through rotation around its geometric axis to cause distribution of the lacquering fluid in the form of a uniform layer over the whole surface of the disc itself.

The lacquering fluid is then solidified through drying and/or molecular cross-linking obtained by exposing the disc to an ultraviolet radiation of appropriate wavelength.

It is also generally provided that identification marks should be reproduced on the lacquered surface, said marks usually consisting of written indications and/or graphic motifs for example referring to the typology of the data recorded on the disc, the manufacturer and/or distributor company or others. In addition to this requirement, generally there is also a commercial need for enriching and/or personalizing the disc with graphic motifs even of several different colours.

In order to meet the above requirements, it is presently provided that the disc should be submitted to a printing step, subsequently to the step of solidifying the lacquering fluid. This operation carried out on working units separated from those intended for disc production, involves an important increase in the finished product costs. In this connection it is to be noted that usually for printing, use of silk-screen printing units is required the cost of which in many cases is very near or even higher than that of the equipment for disc production.

Furthermore, since additional working units are required to be installed and managed, further problems of a logistic character arise and they too affect the finished product costs.

It is an object of the present invention to overcome the drawbacks of the known art, by providing a method enabling the desired written indications, graphic motifs or other identification marks to be reproduced on optical discs without use of any working unit being required in addition to that usually employed for disc production.

The foregoing and further objects that will become more apparent during the following description, are substantially achieved by a method of reproducing identification marks on optical discs for data storage, comprising the features set out in the characterizing part of claim 1.

Further features and advantages will be best understood from the detailed description of a preferred but not exclusive embodiment of a method of reproducing identification marks on optical discs for data storage. This description will be taken hereinafter with reference to the accompanying drawings given by way of non-limiting example, in which:
- Fig. 1 diagrammatically shows an operating step in which a lacquering fluid also functioning as a glue is circumferentially deposited, in the form of a stringcourse, around the central hole of a disc-shaped medium being part of an optical disc under production;
- Fig. 2 shows an operating step following that seen in Fig. 1, in which a label reproducing identification marks is laid down upon the lacquering fluid deposited in the form of a continuous stringcourse;
- Fig. 3 shows the lacquering fluid distributed in the form of a uniform layer between the disc-shaped medium and the label, following a centrifugation step of the disc-shaped medium itself.

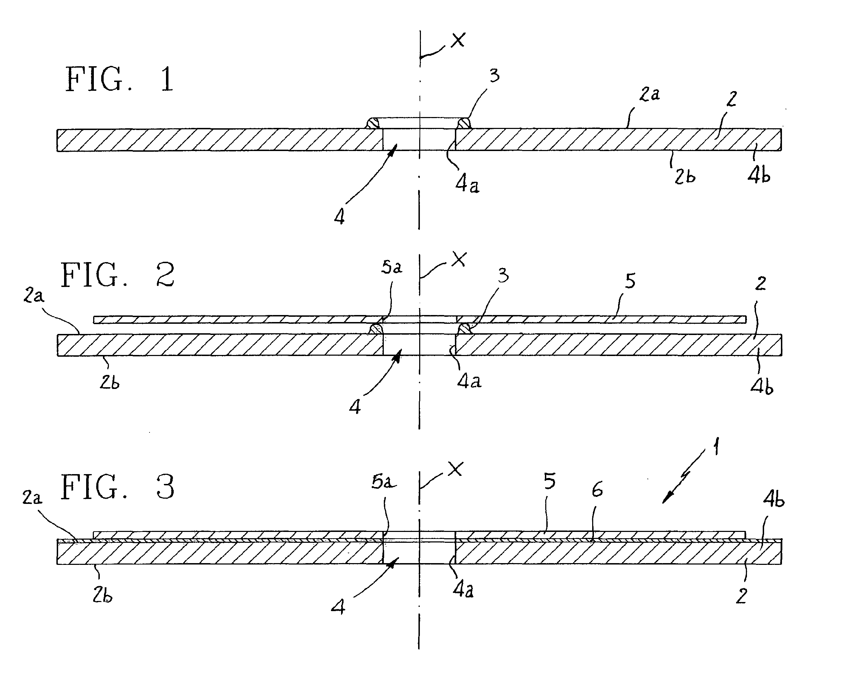

Referring particularly to Fig. 3, an optical disc on which written indications, graphic symbols, representations and/or identification marks of any other type have been reproduced in accordance with the method of the present invention has been generally identified by reference numeral 1.

In accordance with the method in reference, a fluid adhesive material or glue is provided to be deposited on a disc-shaped medium 2 being part of an optical disc under production, so as to form at least one circumferential continuous or discontinuous stringcourse 3, around a geometric rotation axis X-X of the disc-shaped medium itself. In more detail, the circumferential stringcourse 3 is disposed at a short distance from the edge 4a of a central hole 4 usually provided in the disc-shaped medium 2.

Then, a label 5 reproducing the written indications, graphic motifs or other identification marks to be associated with disc 1 is positioned upon the circumferential stringcourse 3.

For facilitating positioning of label 5, the latter may be provided, as shown in the drawings, with a centering hole 5a of the same diameter as the central hole 4. In this manner, label 5 can be positioned by means of the same centering hub (not shown) usually provided for positioning the disc-shaped medium 2 at the central hole 4. Alternatively, the centering hole 5a of label 5 can have a greater diameter than the central hole 4. In this case, centering of label 5 can be obtained by an auxiliary disc-shaped element to be engaged on the above-mentioned centering hub and to be picked up by a mechanical arm (not shown) used to transfer and position the label itself onto the disc-shaped medium 2.

Label 5 can be advantageously made of plastic material or, preferably, paper material, and the identification marks can be reproduced thereon by any usual printing process. In particular, accomplishment of label 5 is provided to be carried out concurrently with the printing processes usually involved in the optical-disc field, for making booklets, leaflets or other types of paper inserts to be employed in preparing a sale package for the optical disc comprising a case of plastic or other material, for example.

It should be understood that, by so doing, manufacture of label 5 has an almost null cost incidence within the production and packaging costs of the optical disc 1.

When positioning has occurred, the disc-shaped medium 2 together with the label 5 and stringcourse 3 formed by the fluid glue, are submitted to a centrifugation step through high-speed rotation around the geometric axis X-X.

Due to the effect of the centrifugal force, a distribution of the fluid glue in a uniform layer 6 of thin thickness is caused between label 5 and the surface of the disc-shaped medium 2. In more detail, during the centrifugation step the fluid glue 3 progressively moves towards an outer perimetral edge 4b of the disc-shaped medium 2, the air interposed between label 5 and the disc-shaped medium being thus ejected so that the disc-shaped medium progressively reduces its thickness thereby causing approaching between label 5 and the disc-shaped medium 2.

At this point a solidification step for the glue is provided, which is for instance obtained by molecular cross-linking of the glue and/or drying of the solvents present therein. In particular, solidification can be obtained either by heat supply or by radiation with ultraviolet rays or other appropriate light radiation, said rays reaching the glue layer passing through label 5. In this connection it has been found that a label of paper material or plastic material of, just as an indication, a basis weight included between 50 and 200 g/m² and a thickness lower than 0.2 mm, is substantially transparent to ultraviolet radiations, for the purpose of solidifying the glue.

In a preferential embodiment, the above described method is advantageously put into practice by carrying out the above step of positioning label 5 during a usual process for manufacturing the optical disc 1. In fact, on making the optical disc, manufacture of the disc-shaped medium 2 of polycarbonate or other transparent plastic material is usually provided by means of an injection moulding operation.

Subsequently to a metallization step to be carried out on a surface 2a of the disc-shaped medium 2 opposite to the reading side 2b of said medium through which digital information will be read and/or recorded by a laser head, the process for manufacturing the optical disc 1 contemplates execution of a lacquering step to protect the metallized surface 2a from mechanical abrasions and/or external agents. For the purpose, deposition of a lacquering fluid in the form of a circumferential stringcourse is usually carried out around the central hole 4, as well as subsequent centrifugation of the disc-shaped medium 2 to obtain distribution of the lacquering fluid in the form of a uniform layer.

In accordance with the present invention, such a lacquering fluid also functions as a glue for application of label 5.

Solidification of the lacquering fluid, and consequent final fastening of label 5, can be advantageously achieved by submitting the fluid to ultraviolet radiations, in a drying station usually arranged in apparatuses designed to make optical discs.

For the purpose it has been found that ultraviolet radiations do not encounter particular difficulties in passing through label 5 and performing the function of drying and/or cross-linking the lacquering fluid.

The present invention achieves important advantages.

In fact, reproduction of identification marks on a label to be applied to the optical disc enables all problems connected with use of the silk-screen printing units required in the known art to be brilliantly overcome.

It should be recognized in this connection that, due to the possibility of making the labels in the same production process with the booklets, leaflets or explanatory inserts to be associated with the optical disc package, as well as to the possibility of applying the label by a mere additional operation to be carried out during the disc manufacture, the cost incidence determined by the application of the identification marks during the production and packaging process can be brought to a practically null value.

## Claims

1. A method of reproducing identification marks on optical discs for data storage,
**characterized in that** it comprises the following steps:
- making a label (5) carrying identification marks;
- depositing a fluid adhesive material or glue in the form of a circumferential stringcourse (3) around a geometric rotation axis (X-X) of a disc-shaped medium (2) being part of an optical disc (1) under production;
- positioning the label (5) upon said circumferential stringcourse (3);
- centrifuging the disc-shaped medium (2) together with the fluid glue and the label (5) around said geometric axis, to cause distribution of the glue in the form of a uniform layer (6) between the disc-shaped medium (2) and the label itself;
- solidifying the glue.

2. A method as claimed in claim 1, said method being carried out within the manufacturing process of said optical disc (1) comprising the steps of:
- making said disc-shaped medium (2);
- depositing a lacquering fluid in the form of a circumferential stringcourse (3) around a geometric rotation axis (X-X) of the disc-shaped medium (2);
- centrifuging the disc-shaped medium (2) around said geometric axis (X-X) to cause distribution of the lacquering fluid in the form of a uniform layer on the disc-shaped medium;
- solidifying the lacquering fluid;
wherein said glue is included in said lacquering fluid.

3. A method as claimed in claim 2, wherein said glue consists of said lacquering fluid.

4. A method as claimed in claim 2, wherein said fluid glue is deposited on a metallized surface (2a) of the disc-shaped medium (2) opposite to a reading side (2b) of said medium.

5. A method as claimed in claim 1, wherein concurrently with said centrifugation step, a step of ejecting the air interposed between said label (5) and disc-shaped medium (2) and a step of fitting the label close to the disc-shaped medium are carried out.

6. A method as claimed in claim 1, wherein manufacture of the label (5) is carried out concurrently with a process of making at least one explanatory insert to be associated with a package containing the optical disc (1).

7. A method as claimed in claim 1, wherein solidification of the glue is obtained by directing a light radiation to said glue through said label (5).
